# EUROPÄISCHE PATENTSCHRIFT

(11) **EP 0 925 121 B1**
(45) Veröffentlichungstag und Bekanntmachung des Hinweises auf die Patenterteilung: **20.06.2001**
(21) Anmeldenummer: 97942893.5
(22) Anmeldetag: 29.08.1997
(51) Int. Cl.: B05D 7/14

(54) **VERFAHREN ZUR KRAFTFAHRZEUG-MEHRSCHICHTLACKIERUNG**
MOTOR VEHICLE MULTILAYERED ENAMELLING PROCESS
PROCEDE DE LAQUAGE MULTICOUCHE POUR VEHICULE A MOTEUR

(30) Priorität: 03.09.1996 DE 19635615; 03.09.1996 DE 19635616
(43) Veröffentlichungstag der Anmeldung: 30.06.1999
(73) Patentinhaber: E.I. DU PONT DE NEMOURS AND COMPANY, Wilmington Delaware 19898 (US)
(72) Erfinder: BLUM, Joachim, D-42897 Remscheid (DE); ENGEL, Dieter, D-42349 Wuppertal (DE); KLEIN, Klausjörg, D-42289 Wuppertal (DE); KÜHHIRT, Walter, D-42857 Remscheid (DE); VOGT-BIRNBRICH, Bettina, D-42719 Solingen (DE)
(74) Vertreter: Gille Hrabal Struck Neidlein Prop Roos
(86) Internationale Anmeldenummer: EP9704702
(87) Internationale Veröffentlichungsnummer: WO9809737

(56) Entgegenhaltungen:
- FR-A- 2 187 943

## Beschreibung

Die Erfindung betrifft ein Verfahren zur Herstellung einer mehrschichtigen Lackierung von eine autophoretisch beschichtbare metallische Oberfläche aufweisenden Kraftfahrzeug-Substraten.

Heutige hochwertige Kraftfahrzeugserienlackierungen werden im allgemeinen erzeugt durch elektrophorefische Abscheidung einer vor Korrosion schützenden Grundierung auf eine in der Regel mit einer Konversionsschicht versehene Rohkarosse und nachfolgender Spritzapplikation von Folgeschichten beispielsweise bestehend aus einer Füllerschicht und einer anschließend aufgebrachten dekorativen Zwecken dienenden Lackierung aus farb- und/oder effektgebender Basislackschicht und einer die Oberfläche versiegelnden schützenden Klarlackschicht. Die Konversionsschicht auf den unbeschichteten Rohkarossen wird erzeugt durch eine erheblichen Aufwand bedeutende chemische Vorbehandlung, im allgemeinen bestehend aus Phosphatierung und Passivierung.

Die Lackierung metallischer Substrate durch autophoretische Abscheidung einer Überzugsschicht aus einem autophoretisch abscheidbaren Überzugsmittel ist bekannt als stromloses Beschichtungsverfahren, das zu guten Korrosionsschutzergebnissen führt und zwar auch dann, wenn eine aufwendige Vorbehandlung unterbleibt, d.h. wenn auf die Erzeugung von Konversionsschichten beispielweise durch Phosphatierung und Passivierung verzichtet wird.

Die direkte Überlackierung einer durch autophoretische Abscheidung erzeugten Überzugsschicht mit einer oder mehreren Lackschichten führt zu Mehrschichtlackierungen, die eine nur geringe Haftung aufweisen und die den in der Autoserienlackierung bestehenden Anforderungen nicht genügen.

Aufgabe der Erfindung ist die Bereitstellung eines Verfahrens zur Herstellung von Kraftfahrzeuglackierungen, die als Grundierung eine autophoretisch abgeschiedene Lackschicht aufweisen. Die autophoretisch abgeschiedene Beschichtung soll die übliche Elektrotauchgrundierung ersetzen und die auf die autophoretisch abgeschiedene Grundierung aufgebrachten Lackschichten sollen eine gute Haftung besitzen, die insbesondere den hohen Anforderungen in der Autoserienlackierung entspricht.

Es hat sich gezeigt, daß diese Aufgabe überraschenderweise gelöst werden kann durch ein Verfabren zur Herstellung einer Kraftfahrzeug-Mehrschichtlackierung auf einem eine autophoretisch beschichtbare, metallische Oberfläche aufweisenden Substrat, bei dem eine erste Grundierungsüberzugsschicht aus einem autophoretisch abscheidbaren Überzugsmittel autophoretisch abgeschieden und anschließend eingebrannt wird und danach ein oder mehrere Folgeüberzugsschichten durch Spritzen aufgebracht werden, wobei das autophoretisch abscheidbare Überzugsmittel ein oder mehrere haftvermittelnd wirkende Bestandteile enthält und/oder wobei, bevor eine oder mehrere weitere Überzugsschichten durch Spritzlackierung aufgebracht werden, die eingebrannte durch autophoretische Abscheidung erzeugte Grundierungsschicht physikalisch und/oder chemisch behandelt und/oder mit einer haftvermittelnden Überzugsschicht versehen wird.

Eine erste Ausführungsform der vorliegenden Erfindung besteht in einem Verfahren zur Herstellung einer Kraftfahrzeug-Mehrschichtlackierung auf einer autophoretisch beschichtbaren, metallischen Oberfläche, bei dem eine erste Grundierungsüberzugsschicht aus einem autophoretisch abscheidbaren Überzugsmittel autophoretisch abgeschieden und anschließend eingebrannt wird und danach ein oder mehrere Folgeüberzugsschichten durch Spritzen aufgebracht werden, wobei das autophoretisch abscheidbare Überzugsmittel ein oder mehrere haftvermittelnd wirkende Bestandteile enthält.

Eine zweite Ausführungsform der vorliegenden Erfindung besteht in einem Verfahren zur Herstellung einer Kraftfahrzeug-Mehrschichtlackierung auf einer autophoretisch beschichtbaren, metallischen Oberfläche, bei dem eine erste Grundierungsüberzugsschicht aus einem autophoretisch abscheidbaren Überzugsmittel autophoretisch abgeschieden und anschließend eingebrannt wird und danach ein oder mehrere Folgeüberzugsschichten durch Spritzen aufgebracht werden, wobei, bevor eine oder mehrere weitere Überzugsschichten durch Spritzlackierung aufgebracht werden, die eingebrannte durch autophoretische Abscheidung erzeugte Grundierungsschicht physikalisch und/oder chemisch behandelt und/oder mit einer haftvermittelnden Überzugsschicht versehen wird. Bei der zweiten Ausführungsform des erfindungsgemäßen Verfahrens enthält das autophoretisch abscheidbare Überzugsmittel keine haftvermittelnd wirkenden Bestandteile.

Eine dritte Ausführungsform der vorliegenden Erfindung besteht in einem Verfahren zur Herstellung einer Kraftfahrzeug-Mehrschichtlackierung auf einer autophoretisch beschichtbaren, metallischen Oberfläche, bei dem eine erste Grundierungsüberzugsschicht aus einem autophoretisch abscheidbaren Überzugsmittel autophoretisch abgeschieden und anschließend eingebrannt wird und danach ein oder mehrere Folgeüberzugsschichten durch Spritzen aufgebracht werden, wobei das autophoretisch abscheidbare Überzugsmittel ein oder mehrere haftvermittelnd wirkende Bestandteile enthält und wobei, bevor eine oder mehrere weitere Überzugsschichten durch Spritzlackierung aufgebracht werden, die eingebrannte durch autophoretische Abscheidung erzeugte Grundierungsschicht physikalisch und/oder chemisch behandelt und/oder mit einer haftvermittelnden Überzugsschicht versehen wird.

Bei der ersten und der zweiten Ausführungsform des erfindungsgemäßen Verfahrens handelt es sich um bevorzugte Ausführungsformen.

Auf die eingebrannte, durch autophoretische Abscheidung erzeugte Grundierungsschicht, die haftvermittelnde Bestandteile enthält und/oder physikalisch und/oder chemisch behandelt und/oder mit einer haftvermittelnden Überzugsschicht versehen ist, werden ein oder mehrere weitere Überzugsschichten durch Spritzapplikation aufgebracht. Dabei kommen alle an sich üblichen Arten von Lackaufbauten in Frage, die durch Spritzapplikation auch auf elektophoretisch abgeschiedene Grundierungsschichten aufgebracht werden können, insbesondere solche Lackaufbauten, die aus dem Bereich der Automobilserienlackierung bekannt sind.

Überraschenderweise weisen die nach dem erfindungsgemäßen Verfahren erhaltenen Mehrschichtlackierungen eine den hohen Anforderungen der Autoserienlackierung genügende Haftung zwischen der ersten, autophoretisch abgeschiedenen Überzugsschicht und der oder den weiteren Überzugsschichten auf.

Beim erfindungsgemäßen Verfahren können als autophoretisch abscheidbare Überzugsmittel an sich bekannte autophoretisch abscheidbare Überzugsmittel verwendet werden zur Erzeugung der ersten Überzugsschichl, der Grundierungsschicht, wobei im Falle der ersten und dritten Ausführungsform des erfindungsgemäßen Verfahrens als einzige Einschränkung gilt, daß das autophoretisch abscheidbare Überzugsmittel ein oder mehrere haftvermittelnd wirkende Bestandteile enthält.

Bei den autophoretisch abscheidbaren Überzugsmitteln handelt es sich um Überzugsmittel auf Basis wäßriger Bindemitteldispersionen mit negativer Oberflächenladung der Bindemittelteilchen. Aufgrund ihres in der Regel sauren pH-Wertes von beispielsweise zwischen 1 und 6, bevorzugt zwischen 1,5 und 5,0, und ihres in der Regel oxidierenden Charakters sind Autophoreselacke befähigt, ausreichend unedle Metalloberflächen unter Freisetzung entsprechender Metallionen anzugreifen. Wird dabei im Bereich der Metalloberfläche eine Metallionenkonzentration erreicht, die ausreicht, die in der Wasserphase dispergierten Bindemittelteilchen zu destabilisieren und zu koagulieren, so kommt es zur Abscheidung eines Überzugsfilms auf der Metalloberfläche.

Die im erfindungsgemäßen Verfahren einsetzbaren autophoretisch abscheidbaren Überzugsmittel besitzen im allgemeinen einen niedrigen Festkörpergehalt von beispielsweise bis zu 20 Gew.-%, wobei die Untergrenze in der Regel beispielsweise 5 Gew.-% und die Obergrenze beispielsweise 10 Gew.-% beträgt. Sie enthalten neben autophoretisch abscheidbarem filmbildendem Bindemittel, Wasser, Säure und den im Falle der ersten und dritten Ausführungsform des erfindungsgemäßen Verfahrens erfindungswesentlichen haftvermittelnd wirkenden Betandteilen in der Regel auch Oxidationsmittel sowie gegebenenfalls Vernetzer für die Bindemittel, Füllstoffe, Pigmente und lackübliche Additive.

Die für die Erzeugung der ersten Überzugsschicht erfindungsgemäß verwendbaren autophoretisch abscheidbaren Überzugsmittel können physikalisch trocknend oder unter Ausbildung kovalenter Bindungen vernetzbar sein. Bei den unter Ausbildung kovalenter Bindungen vernetzenden Autophoreselacken kann es sich um selbst- oder fremdvernetzende Systeme handeln.

Die im erfindungsgemäßen Verfahren für die Herstellung der ersten Überzugsschicht verwendbaren Autophoreselacke enthalten ein oder mehrere an sich neutrale oder anionische Gruppen aufweisende, filmbildende Bindemittel. Sie können, insbesondere falls die Bindemittel nicht selbstvernetzend oder physikalisch trocknend (thermoplastisch) sind, gegebenenfalls auch Vernetzer enthalten. Bindemittel und gegebenenfalls enthaltene Vernetzer liegen als wäßrige Dispersion mit negativer Oberflächenladung der Teilchen vor. Die negative Oberflächenladung stabilisiert die dispergierten Teilchen in der wäßrigen Phase. Die negative Oberflächenladung kann beispielsweise von anionischen Gruppen im Bindemittel und/oder insbesondere bei an sich neutralen Bindemitteln von anionischem Emulgator für das Bindemittel und die Vernetzer herrühren. Beispiele für anionische Gruppen im Bindemittel sind anionische Gruppen des Bindemittels an sich, beispielsweise Carboxylgruppen oder Sulfonatgruppen, und/oder anionische Reste aus der Bindemittelherstellung, beispielsweise aus der Herstellung eines an sich neutralen Bindemittels. Beispiele für anionische Reste aus der Bindemittelherstellung sind Sulfatgruppen als im Bindemittel enthaltene Überreste aus einer durch Peroxodisulfat initiierten radikalischen Polymerisation. Sowohl die Bindemittelkomponente als auch die Vernetzerkomponente unterliegen an sich keinerlei Beschränkung; es können lackübliche, dem Fachmann geläufige Harze verwendet werden. Beispielsweise können als filmbildende Bindemittel Polyester-, Polyurethan-, Epoxid- und/oder Polymerisatharze verwendet werden. Polymerisatharze, d.h. durch radikalische Polymerisation, insbesondere durch Emulsionspolymerisation oder Saatpolymerisation hergestellte Bindemittel sind besonders bevorzugt im Rahmen des erfindungsgemäßen Verfahrens. Insbesondere bevorzugt sind übliche wäßrige, thermoplastische Polymerisatdispersionen (Latices), die Homo- oder Copolymere von olefinisch ungesättigten Monomeren mit Glastemperaturen beispielsweise zwischen 0 und 100 °C als disperse Phase enthalten. Beispiele für geeignete olefinisch ungesättigte Monomere zum Autbau solcher Homo- und Copolymeren sind (Meth)acrylsäureester, wie z.B. Methyl(meth)acrylat, Ethyl(meth)acrylat, n-Butyl(meth)acrylat, Hydroxyethyl(meth)acrylat, Hydroxypropyl(meth)acrylat, Ethylhexyl(meth)acrylat; Glycidylester ungesättigter Carbonsäuren, wie z.B. Glycidyl(meth)acrylat; (Meth)acrylamid, (Meth)acrylnitril, Natrium-2-Sulfoethylmethacrylat, (Meth)acrylsäure; aber auch Monomere ohne weitere funktionelle Gruppen oder mit anderen funktionellen Gruppen, wie z.B. Ethylen, Styrol, Vinylchlorid, Vinylidenchlorid, Vinylacetat, Butadien. Beispiele für im Rahmen der Erfindung geeignete wäßrige Polymerisatdispersionen sind Styrol/Butadien-, Butadien/Acrylnitril-, Vinylchlorid-, Ethylen/Vinylacetat- sowie Vinylidenchlorid-Copolymerdispersionen, wobei letzere besonders bevorzugt sind.

Die Auswahl der gegebenenfalls enthaltenen Vernetzer richtet sich nach der Funktionalität der Bindemittel, d.h. die Vernetzer werden aus üblichen, dem Fachmann geläufigen Vernetzern so ausgewählt, daß sie eine zur Funktionalität der Bindemittel komplementäre, reaktive Funktionalität aufweisen. Beispiele für solche komplementäre Funktionalitäten zwischen Bindemittel und Vernetzer sind: Hydroxyl/Methylolether, Hydroxyl/blockiertes Isocyanat. Sofern miteinander verträglich, können auch mehrere solcher komplementärer Funktionalitäten in einem Autophoreselack nebeneinander vorliegen. Die gegebenenfalls in den Autophoreselacken verwendeten Vernetzer können einzeln oder im Gemisch vorliegen.

Die autophoretisch abscheidbaren Überzugsmittel enthalten eine oder mehrere freie Säuren in einer Menge zur Einstellung des vorstehend genannten pH-Bereichs und bevorzugt auch ein oder mehrere Oxidationsmittel. Beispiele für bevorzugte Säuren sind anorganische Säuren, wie Salzsäure, Phosphorsäure, Schwefelsäure, Salpetersäure und organische Säuren, wie Ameisensäure, Essigsäure. Flußsäure ist besonders bevorzugt. Beispiele für bevorzugte Oxidationsmittel sind Chromat, Dichromat, Bromat, Chlorat, Perchlorat, Permanganat, Persulfat, Peroxodisulfat. Besonders bevorzugt ist Wasserstoffperoxid.

Eine besonders bevorzugte Kombination von Säure und Oxidationsmittel ist die Kombination Flußsäure/Wasserstoffperoxid.

Bevorzugt enthalten die im erfindungsgemäßen Verfahren einsetzbaren autophoretisch abscheidbaren Überzugsmittel Pigmente und/oder Füllstoffe. Als Pigmente kommen beispielsweise übliche, anorganische oder organische, insbesondere säurefeste Pigmente und/oder Füllstoffe in Frage. Beispiele sind Ruß, Titandioxid, Eisenoxidpigmente, Kaolin, Talkum oder Siliciumdioxid, aber auch Korrosionsschutzpigmente.

Pigmente und Füllstoffe können beispielsweise als Pigmentsuspensionen (Pigmentslurries) oder Pigmentanreibungen in Wasser und/oder organischen, wassermischbaren Lösemitteln, wie Glykole, z.B. Ethylenglykol, Propylenglykol; Alkohole, z.B. sec.-Butanol und Hexanol; Glykolether, z.B. Ethoxypropanol, Methoxypropanol und Butoxyethanol bei der Formulierung des erfindungsgemäß einsetzbaren autophoretisch abscheidbaren Überzugsmittels eingesetzt werden. Derartige Pigmentanreibungen sind auch im Handel erhältlich und werden z.B. von der Firma HOECHST unter der Bezeichnung Colanyl^{R} vertrieben. Beispielsweise können wäßrige nichtionisch stabilisierte Pigmentdispersionen mit anionisch stabilisierten Harzdispersionen vermischt werden unter Erzeugung von zur Pigmentierung von Autophoreselacken geeigneten Pigmentkonzentraten.

Die im erfindungsgemäßen Verfahren einsetzbaren autophoretisch abscheidbaren Überzugsmittel können weiterhin übliche Additive enthalten. Beispiele dafür sind übliche Lackadditive, wie Netzmittel, anionische und/oder nichtionische Emulgatoren, Schutzkolloide, Verlaufsmittel, Korrosionsinhibitoren, Weichmacher, Antischaummittel, Lösemittel beispielsweise als Filmbildehilfsmittel, Lichtschutzmittel, Fluoride, insbesondere z.B. Eisentrifluorid, Hydrogenfluoride, komplexe Fluoranionen, z.B. Tetrafluoroborate, Hexafluorozirkonate, Hexafluorotitanate. Insbesondere Schutzkolloide und/oder Emulgatoren sind bevorzugt nur in kleinstmöglicher Menge enthalten, beispielsweise unterhalb der kritischen Mizellenkonzentration, und entstammen bevorzugt den bei der Formulierung der autophoretisch abscheidbaren Überzugsmittel eingesetzten Bindemitteldispersionen. Beispielsweise handelt es sich um bei der Herstellung der Bindemitteldispersionen eingesetzte Schutzkolloide und/oder Emulgatoren.

Beispiele für grundsätzlich einsetzbare Zusammensetzungen von Autophoreselacken sowie Bindemittelsysteme sind beschrieben in: US 3 592 699, US 3 709 743, US 3 776 848, US 3 791 431, US 4 104 424, EP-A-0 037 750, EP-A-0 132 828, EP-A-0 310 708, DE-A 37 27 382, WO 91 05 023, WO 94 06 861.

Im Falle der ersten und dritten Ausführungsform des erfindungsgemäßen Verfahrens enthalten die autophoretisch abscheidbaren Überzugsmittel ein oder mehrere haftvermittelnd wirkende Bestandteile. Beispiele für derartige Bestandteile sind insbesondere solche wie sie aus dem Bereich der Lackierung von Kunststoffteilen aus Polyolefinkunststoffen, wie beispielsweise Polyethylen oder Polypropylen bekannt sind oder dafür empfohlen werden. So sind für die Lackierung von Kunststoffteilen haftvermittelnde Überzugsmittel bekannt, die einen oder mehrere haftvermittelnd wirkende Bestandteile als solche allein oder als Additiv in Kombination mit Bindemitteln oder Bindemittelsystemen enthalten. Beispiele für im Bereich der Kunststofflackierung bevorzugte und auch im erfindungsgemäßen Verfahren vorteilhaft verwendbare haftvermittelnd wirkende Komponenten sind chlorierte und/oder beispielsweise durch Maleinisierung (Umsetzung mit Maleinsäureanhydrid) mit Carboxylgruppen versehene und gegebenenfalls chemisch weiter modifizierte Polyolefine. Bevorzugt sind die Chlor enthaltenden Vertreter, sie besitzen zahlenmittlere Molmassen von 5000 bis 50000 bei einem Chlorgehalt von 10 bis 40 Gew.-%.

Beispiele für chlorierte und/oder beispielsweise durch Maleinisierung (Umsetzung mit Maleinsäureanhydrid) mit Carboxylgruppen versehene und gegebenenfalls chemisch weiter modifizierte Polyolefine bzw. solche Produkte enthaltende haftvermittelnde Überzugmittel für die Kunststofflackierung sind beschrieben in EP-A-0 396 055, EP-A-0 397 974, EP-A-0 539 710, WO 89 11 494, WO 93 01 244, WO 94 28 077, WO 95 04 113.

Bezogen auf den Festharzgehalt des autophoretisch abgeschiedenen Überzugsmittels beträgt der Anteil des oder der haftvermittelnd wirkenden Bestandteile beispielsweise zwischen 1 und 30 Gew.-%, bevorzugt zwischen 2 und 25 Gew.-%.

Die haftvermittelnd wirkenden Bestandteile können beispielsweise als solche, gegebenenfalls unter Zuhilfenahme von anionischem und/oder nichtionischem Emulgator und/oder Lösemittel dem Autophoreseüberzugsmittel zugesetzt werden. Beispielsweise können die haftvermittelnd wirkenden Bestandteile als wäßrige Emulsion zugesetzt werden. Es ist beispielsweise auch möglich, die haftvermittelnd wirkenden Bestandteile bei der Bindemittelherstellung zuzusetzen, so daß sie auf diese Weise in das erfindungsgemäß eingesetzte Autophoreseüberzugsmittel gelangen.

Im Falle der zweiten und dritten Ausführungsform des erfindungsgemäßen Verfahrens wird die durch autophoretische Abscheidung erzeugte und eingebrannte Grundierungsschicht physikalisch und/oder chemisch behandelt und/oder mit einer haftvermittelnden Überzugsschicht versehen, bevor eine oder mehrere weitere Überzugsschichten durch Spritzlackierung aufgebracht werden. Dabei handelt es sich um Methoden zur Erzeugung einer ausreichenden Haftung, wie sie insbesondere aus dem Bereich der Lackierung von Kunststoffteilen aus Polyolefinkunststoffen, wie beispielsweise Polyethylen oder Polypropylen bekannt sind. Im Zusammenhang mit der Kunststofflackierung existiert eine Vielzahl von Veröffentlichungen und Patentliteratur, woraus jedoch kein Hinweis entnommen werden kann, der dem Fachmann eine Anwendung der vorstehend erwähnten Methoden auf durch autophoretische Abscheidung erzeugte Beschichtungen nahelegt.

Beispiele für physikalische bzw. chemische Methoden, die bei der zweiten und dritten Ausführungsform des erfindungsgemäßen Verfahrens zur Behandlung der eingebrannten Autophoresegrundierungsschicht angewendet werden können und aus dem Bereich der Lackierung von Polyolefinkunststoffen bekannt sind, sind Coronabehandlung, Plasmabehandlung, Beflammen, Bestrahlung mit ultraviolettem Licht, gegebenenfalls in Gegenwart von zu Radikalen zerfallenden Photoinitiatoren, Ätzangriff mit aggressiven chemischen Agenzien, beispielsweise mit Fluor oder Schwefeltrioxid. Im erfindungsgemäßen Verfahren kann nur eine oder eine Kombination von Behandlungsmethoden angewendet werden. Dies kann zugleich oder nacheinander geschehen. Beflammen oder Plasmabehandlung der eingebrannten durch autophoretische Abscheidung erzeugten Grundierungsschicht sind bei der zweiten und dritten Ausführungsform des erfindungsgemäßen Verfahrens bevorzugte Behandlungsmethoden. Besonders bevorzugt jedoch wird bei der zweiten und dritten Ausführungsform des erfindungsgemäßen Verfahrens eine haftvermittelnde Überzugsschicht auf die eingebrannte, und gegebenenfalls physikalisch und/oder chemisch behandelte, autophoretisch abgeschiedene Grundierungsschicht appliziert, bevor eine oder mehrere weitere Überzugsschichten durch Spritzlackierung aufgebracht werden. Bevorzugt ist die autophoretisch abgeschiedene und eingebrannte Grundierungsschicht dabei nicht physikalisch und/oder chemisch behandelt und es wird nur eine haftvermittelnde Überzugsschicht aufgetragen, bevor eine oder mehrere weitere Überzugsschichten aufgebracht werden. Die Applikation der haftvermittelnden Überzugsschicht erfolgt bevorzugt durch Spritzen.

Die haftvermittelnde Überzugsschicht kann aus einem haftvermittelnden Überzugsmittel aufgebracht werden. Die haftvermittelnden Überzugsmittel sind flüssige Überzugsmittel auf wäßriger Basis oder auf der Basis organischer Lösemittel. Es handelt sich beispielsweise um übliche Haftprimer, insbesondere solche, wie sie beispielsweise für die Anwendung auf Polyolefinkunststoffen angeboten werden und die ein hinsichtlich der Haftung maßgeschneidertes Bindemittelsystem enthalten. Beispiele für solche Bindemittelsysteme sind Epoxid/Amin- sowie Polyurethansysteme. Bevorzugt enthalten die im erfindungsgemäßen Verfahren verwendeten haftvermittelnden Überzugsmittel aber einen oder mehrere haftvermittelnd wirkende Bestandteile. Dabei können die haftvermittelnden Komponenten als solche allein oder als Additiv in Kombination mit Bindemitteln oder Bindemittelsystemen enthalten sein. Der Mengenanteil an haftvermittelnder Komponente im haftvermittelnden Überzugsmittel beträgt dabei beispielsweise zwischen 2 und 25, bevorzugt zwischen 3 und 20 Gew.-%. Insbesondere handelt es sich bei den haftvermittelnden Überzugsmitteln um solche, wie sie aus dem Bereich der Lackierung von Kunststoffteilen aus Polyolefinkunststoffen, wie beispielsweise Polyethylen oder Polypropylen bekannt sind oder dafür empfohlen werden. Sie werden bevorzugt durch Spritzen aufgetragen im allgemeinen in von der Art des haftvermittelnden Überzugsmittels abhängiger Trockenschichtdicke, beispielsweise zwischen 1 und 30 *µ*m. Vor der weiteren Überlackierung werden die aus den haftvermittelnden Überzugsmitteln erzeugten Überzugsschichten in der Regel getrocknet oder, falls ein chemisch härtbares Bindemittelsystem enthalten ist, beispielsweise bei Temperaturen zwischen 20 und 130 °C ausgehärtet.

Beispiele für bevorzugte haftvermittelnd wirkende Komponenten sind die gleichen, wie vorstehend als in den Autophoreselacken selber einsetzbar beschrieben.

Die haftvermittelnde(n) Komponente(n) können auch Bestandteil(e) des direkt auf die Autophoresegrundierung spritzapplizierten Überzugsmittels sein und beispielsweise in einer Menge von 2 bis 30 Gew.-%, bezogen auf den Festharzgehalt des Spritzüberzugsmittels enthalten sein, d.h. die haftvermittelnde Überzugsschicht muß dabei nicht aus einem separaten haftvermittelnden Überzugsmittel aufgebracht werden. Beispiele für direkt auf die Autophoresegrundierung spritzapplizierte Überzugsmittel sind Füller, Basislacke und Decklacke. Basislacksysteme, die chlorierte Polyolefine als haftvermittelnde Bestandteile enthalten und geeignet sind für die Direktlackierung von Polyolefinkunststoffen, sind beschrieben in EP-A-0 455 211, EP-A-0 591 681 und WO 95 07 320.

Auf die eingebrannte, durch autophoretische Abscheidung erzeugte, haftvermittelnde Bestandteile enthaltende und/oder physikalisch und/oder chemisch behandelte und/oder mit einer haftvermittelnden Überzugsschicht versehene Grundierungsschicht werden ein oder mehrere weitere Überzugsschichten durch Spritzapplikation aufgebracht.

Dabei kommen alle an sich üblichen Arten von Lackaufbauten in Frage, die durch Spritzapplikation auch auf durch elektrophoretische Abscheidung erzeugte Grundierungsschichten aufgebracht werden können, insbesondere solche Lackaufbauten, die aus dem Bereich der Automobilserienlackierung bekannt sind.

Beispiele für Kraftfahrzeug-Mehrschichtlackierungen, die nach den bevorzugten Ausführungsformen des erfindungsgemäßen Verfahrens (erste und zweite Ausführungsform) hergestellt werden können sind:
1) Autophoresegrundierung/gegebenenfallshaftvermittelnde Überzugsschicht/Folgeüberzugsschichten:Füller/farbtonbestimmender Basislack/Klarlack.
2) Autophoresegrundierung/gegebenenfallshaftvermittelnde Überzugsschicht/ Folgeüberzugsschichten: erster, modifizierter Basislack/zweiter, farbtonbestimmender Basislack/Klarlack.
3) Autophoresegrundierung/gegebenenfallshaftvermittelnde Überzugsschicht/Folgeüberzugsschichten:farbtonbestimmender Basislack/Klarlack.
4) Autophoresegrundierung/gegebenenfallshaftvermittelnde Überzugsschicht/Folgeüberzugsschichten:Füller/farbtonbestimmender Decklack.
5) Autophoresegrundierung/gegebenenfallshaftvermittelnde Überzugsschicht/Folgeüberzugsschicht:farbtonbestimmender Decklack.

Bei der ersten Ausführungsform des erfindungsgemäßen Verfahrens enthält die Autophoresegrundierung einen oder mehrere haftvermittelnd wirkende Bestandteile. Bei der ersten, direkt auf die Autophoresegrundierung spritzapplizierten Überzugsschicht kann es sich um eine Füller-, Basislack-, modifizierte Basislack- oder Decklackschicht handeln.

Bei der zweiten Ausführungsform des erfindungsgemäßen Verfahrens ist die von haftvermittelnd wirkenden Bestandteilen freie Autophoresegrundierung entweder physikalisch und/oder chemisch behandelt und/oder mit einer haftvermittelnden Überzugsschicht versehen und die nach dem erfindungsgemäßen Verfahren hergestellten Mehrschichtlackierungen umfassen eine oder mehrere Folgeüberzugsschichten, oder es werden Mehrschichtlackierungen erhalten, die aus der von haftvermittelnd wirkenden Bestandteilen freien, unbehandelten Autophoresegrundierung und einer oder mehreren direkt auf diese spritzapplizierten Folgeüberzugsschichten bestehen. Dabei enthält die erste, direkt auf die Autophoresegrundierung spritzapplizierte Überzugsschicht eine oder mehrere haftvermittelnd wirkende Komponenten. Bei der ersten, direkt auf die Autophoresegrundierung spritzapplizierten Überzugsschicht kann es sich um eine Füller-, Basislack-, modifizierte Basislack- oder Decklackschicht handeln.

Als Füller können im erfindungsgemäßen Verfahren an sich bekannte, übliche Füllerüberzugsmittel verwendet werden, wie sie zur Herstellung von insbesondere der Oberflächenglättung und dem Steinschlagschutz dienenden Füllerschichten in Mehrschichtlackierungen, insbesondere Kraftfahrzeugmehrschichtlackierungen, eingesetzt werden und in großer Zahl beispielsweise aus der Patentliteratur bekannt sind. Beispiele sind Pulverfüller, wäßrige Füller und Füller auf der Basis organischer Lösemittel. Es handelt sich in der Regel um beim Einbrennen unter Ausbildung kovalenter Bindungen infolge chemischer Vernetzung aushärtende Lacksysteme.

Die Füller enthalten ein oder mehrere übliche filmbildende Bindemittel sowie gegebenenfalls Vernetzer und in der Regel übliche Pigmente und Füllstoffe. Als filmbildende Bindemittel können beispielweise bevorzugt bydroxyfunktionelle Polyester- und/oder Polyurethanharze verwendet werden. Bevorzugte Vernetzer sind Aminoplastharze und/oder blockierte Polyisocyanatvernetzer. Beispiele für Pigmente und Füllstoffe sind Ruß, Titandioxid, feindisperses Siliciumdioxid, Aluminiumsilikat (z.B. Kaolin), Magnesiumsilikat (z.B. Talkum), Calciumcarbonat (z.B. Kreide), Bariumsulfat (z.B. Schwerspat), Eisenoxidpigmente.

Die Füller werden durch Spritzen in Trockenschichtdicken von 25 bis 45 *µ*m appliziert und in der Regel bei Temperaturen zwischen 120 und 180 °C eingebrannt.

Als Basislacke können an sich bekannte farb- und/oder effektgebende und damit den Farbton der erfindungsgemäß hergestellten Mehrschichtlackierungen bestimmende Basislacküberzugsmittel verwendet werden, wie sie zur Herstellung von Basislack/Klarlack-Zweischichtlackierungen eingesetzt werden und in großer Zahl beispielsweise aus der Patentliteratur bekannt sind.

Die erfindungsgemäß verwendbaren Basislacke können physikalisch trocknend oder unter Ausbildung kovalenter Bindungen vernetzbar sein. Bei den unter Ausbildung kovalenter Bindungen vernetzenden Basislacken kann es sich um selbst- oder fremdvernetzende Systeme handeln.

Die im erfindungsgemäßen Verfahren verwendbaren farb- und/oder effektgebenden Basislacke sind flüssige Überzugsmittel. Es kann sich um ein- oder mehrkomponentige Überzugsmittel handeln, einkomponentige sind bevorzugt. Es kann sich um Systeme auf Basis organischer Lösemittel handeln oder es handelt sich bevorzugt um Wasserbasislacke.

Bei den im erfindungsgemäßen Verfahren verwendbaren Basislacküberzugsmitteln handelt es sich um übliche Lacksysteme, die ein oder mehrere übliche filmbildende Bindemittel enthalten. Sie können, falls die Bindemittel nicht selbstvernetzend oder selbsttrocknend sind, gegebenenfalls auch Vernetzer enthalten. Sowohl die Bindemittelkomponente als auch die Vernetzerkomponente unterliegen keinerlei Beschränkung. Als filmbildende Bindemittel können beispielsweise Polyester-, Polyurethan- und/oder (Meth)acrylcopolymerharze verwendet werden. Im Fall der bevorzugten Wasserbasislacke sind bevorzugt Polyurethanharze enthalten, besonders bevorzugt mindestens zu einem Anteil von 15 Gew.-%, bezogen auf den Festharzgehalt des Wasserbasislacks. Die Auswahl der gegebenenfalls enthaltenen Vernetzer ist unkritisch, sie richtet sich nach der Funktionalität der Bindeminel.

Die beim erfindungsgemäßen Verfahren eingesetzen Basislacke enthalten neben den üblichen physikalisch trocknenden und/oder chemisch vernetzenden Bindemitteln anorganische und/oder organische Buntpigmente und/oder Effektpigmente, wie z.B. Titandioxid, Eisenoxidpigmente, Ruß, Azopigmente, Phthalocyaninpigmente, Chinacridonpigmente, Metallpigmente, z.B. aus Titan, Aluminium oder Kupfer, Interferenzpigmente, wie z.B. titandioxidbeschichtetes Aluminium, beschichteter Glimmer, Graphiteffektpigmente, plättchenförmiges Eisenoxid, plättchenförmige Kupferphthalocyaninpigmente.

Weiterhin können die Basislacke lackübliche Additive enthalten, wie z.B. Füllstoffe, Katalysatoren, Verlaufsmittel, Antikratermittel oder insbesondere Lichtschutzmittel gegebenenfalls in Kombination mit Antioxidantien.

Die Basislackschicht kann als zweischichtiges Basislacksystem bestehend aus einer ersten, modifizierten Basislackschicht und einer zweiten, den eigentlichen Farbton der erfindungsgemäß hergestellten Mehrschichtlackierung bestimmenden Basislackschicht appliziert werden. Dabei übernimmt der erste Basislack wichtige Füllerfunktionen wie beispielsweise Oberflächenglättung und Steinschlagschutz. Er ist dementsprechend modifiziert, beispielsweise indem er zusätzliche modifizierende Bindemittelkomponenten oder Füllstoffkomponenten enthält. Er kann beispielsweise aus dem anschließend applizierten, den eigentlichen Farbton bestimmenden Basislack hergestellt werden durch Vermischen mit den zusätzlichen Komponenten.

Als Klarlacküberzugsmittel sind grundsätzlich alle üblichen Klarlacke oder transparent farbig oder farblos pigmentierten Überzugsmittel geeignet. Dabei kann es sich um einoder mehrkomponentige Klarlacküberzugsmittel handeln. Sie können lösemittelfrei (flüssig oder als Pulverklarlack) sein, oder es kann sich um Systeme auf der Basis von Lösemitteln handeln oder es handelt sich um wasserverdünnbare Klarlacke, deren Bindemittelsysteme in geeigneter Weise, z.B. anionisch, kationisch oder nicht-ionisch, stabilisiert sind. Bei den wasserverdünnbaren Klarlacksystemen kann es sich um wasserlösliche oder in Wasser dispergierte Systeme, beispielsweise Emulsionssysteme oder Pulverslurry-Systeme handeln. Die Klarlacküberzugsmittel härten beim Einbrennen unter Ausbildung kovalenter Bindungen infolge chemischer Vernetzung aus.

Bei den im erfindungsgemäßen Verfahren verwendbaren Klarlacken handelt es sich um übliche Klarlacküberzugsmittel, die ein oder mehrere übliche filmbildende Bindemittel enthalten. Sie können, falls die Bindemittel nicht selbstvernetzend sind, gegebenenfalls auch Vernetzer enthalten. Sowohl die Bindemittelkomponente als auch die Vernetzerkomponente unterliegen keinerlei Beschränkung. Als filmbildende Bindemittel können beispielsweise Polyester-, Polyurethan- und/oder (Meth)acryl-Copolymer-Harze verwendet werden. Die Auswahl der gegebenenfalls enthaltenen Vernetzer ist unkritisch, sie richtet sich nach der Funktionalität der Bindemittel.

Neben den chemisch vernetzenden Bindemitteln sowie gegebenenfalls Vernetzern können die im erfindungsgemäßen Verfahren einsetzbaren Klarlacke lackübliche Additive, wie z.B. Katalysatoren, Verlaufsmittel, Farbstoffe, insbesondere jedoch Rheologiesteuerer, wie Mikrogele, NAD (non-aqueous-dispersions), disubstituierte Harnstoffe ("sagging control agents"), sowie Lichtschutzmittel gegebenenfalls in Kombination mit Antioxidantien enthalten.

Der transparente Überzug kann in einer einzigen Schicht oder in Form von mehreren Schichten aus dem gleichen oder aus mehreren verschiedenen transparenten Überzugsmitteln aufgebracht werden. Zweckmäßig wird die transparente Überzugsschicht jedoch aus nur einem Klarlacküberzugsmittel aufgebracht.

Bei den Decklacken handelt es sich um für die Erzeugung einer farb- und/oder effektgebenden Schicht übliche Decklacke auf wäßriger Basis oder auf der Basis organischer Lösemittel oder um Pulverdecklacke. Den Decklacken liegen an sich bekannte Bindemittel/Vernetzer-Systeme zugrunde, wie beispielsweise vorstehend schon im Zusammenhang mit den Klarlacken beschrieben. Die Decklacke enthalten farb- und/oder effektgebende Pigmente, wie sie beispielsweise vorstehend für die Basislacke beschrieben sind. Die Decklacke werden durch Spritzen in einer Trockenschichtdicke von beispielsweise 30 bis 80 *µ*m aufgebracht und beispielsweise bei Temperaturen zwischen 120 und 160 °C eingebrannt.

Bevorzugt werden nach dem erfindungsgemäßen Verfahren Kraftfahrzeug-Mehrschichtlackierungen hergestellt, die als farbbestimmende Decklackschicht eine zweischichtige Basislack/Klarlack-Decklackierung aufweisen. Dabei erfolgt der Spritzauftrag der Basislackschicht aus dem farb- und/oder effektgebenden Basislack in einer vom Farbton abhängigen Trockenschichtdicke von in der Regel 10 bis 30 *µ*m, beispielsweise durch Druckluftspritzen, Airless-Spritzen oder ESTA-Hochrotationsspritzen. Im Anschluß an die Applikation der Basislackschicht erfolgt nach einer kurzen Ablüftphase, z.B. bei 20 bis 80 °C, der Auftrag des Klarlacks bevorzugt im Naß-in-Naß-Verfahren. Die Klarlackschicht wird aus einem üblichen flüssigen oder Pulverklarlack (in diesem Fall handelt es sich um eine Trocken-in-Naß-Applikafion) aufgebracht und gemeinsam mit der Basislackschicht beispielsweise bei Temperaturen von 80 bis 160 °C eingebrannt.

Als Substrate für das erfindungsgemäße Verfahren sind autophoretisch beschichtbare, metallische Oberfläche aufweisende Rohkarossen bevorzugt. Diese können aus einem einzigen Metall gefertigt oder in Mischbauweise aus mehreren metallischen Werkstoffen und/oder aus mit einer entsprechenden Metallschicht versehenen Kunststoffteilen aufgebaut sein. Als metallische Oberflächen kommen von Autophoreselacksystemen, insbesondere bei saurem pH von beispielsweise zwischen 1 und 6 unter Freisetzung von Metallionen angreifbare, dem Fachmann geläufige übliche Metalloberflächen in Frage, beispielsweise aus Eisen, Zink, Aluminium oder entsprechenden Legierungen, aber auch beispielsweise verzinkte Stahloberflächen. Die Metalloberflächen können vorbehandelt, beispielsweise mit einer Phosphatierung und gegebenenfalls Passivierung versehen sein. Dies ist jedoch gerade unter Korrosionsschutzgesichtpunkten nicht notwendig und stellt somit einen weiteren Vorteil des erfindungsgemäßen Verfahrens dar. Es sei darauf hingewiesen, daß der in der vorliegenden Erfindung verwendete Begriff "Rohkarossen" Kraftfahrzeugrohkarossen aber beispielsweise auch deren Bauteile sowie Sichtflächen beinhaltende Kraftfahrzeugchassis umfaßt.

Auf diese Substrate wird die erste Überzugsschicht aus dem autophoretisch abscheidbaren Überzugsmittel autophoretisch in üblicher Weise, bevorzugt im Tauchverfahren, bevorzugt in einer Trockenschichtdicke von beispielsweise 5 bis 25 *µ*m, besonders bevorzugt von 10 bis 20 *µ*m abgeschieden. Die autophoretisch abgeschiedene Grundierungsschicht kann vor dem Einbrennen mit Wasser und/oder gegebenenfalls mit speziellen Lösungen nachbehandelt, beispielsweise gespült werden. (Im Zusammenhang mit der Applikation des autophoretisch abscheidbaren Überzugsmittels kann der Begriff "Einbrennen" abhängig von der Art des Autophoreselacksystems ein Einbrennen unter chemischer Vernetzung der Autophoreseüberzugssschicht oder eine rein physikalische Trocknung bei erhöhter Temperatur, beispielsweise unter Schmelzen oder Versintern und Ausbildung eines geschlossenen Autophoreselacküberzuges bedeuten). Nach dem Einbrennen bei dem verwendeten Autophoreselacksystem angepaßten Temperaturen zwischen 80 und 190 °C, beispielsweise bevorzugt zwischen 100 und 160 °C, wird das so erhaltene Substrat durch Spritzlackierung mit einer oder mehreren weiteren Überzugsschichten versehen oder zunächst physikalisch und/oder chemisch behandelt und/oder mit einer haftvermittelnden Überzugsschicht versehen, bevor wie vorstehend beschrieben durch Spritzlackierung eine oder mehrere weitere Überzugsschichten aufgebracht werden.

Die autophoretisch abgeschiedene Grundierungsschicht dient insbesondere der Schutzwirkung gegen chemischen und korrosiven Angriff. Sie erstreckt sich bevorzugt über die gesamte Oberfläche des beispielsweise dreidimensionalen Substrates. Ihre im Falle der zweiten und dritten Ausführungsform des erfindungsgemäßen Verfahrens physikalische und/oder chemische Behandlung und/oder die Applikation einer haftvermittelnden Überzugsschicht auf die Grundierungsüberzugsschicht kann sich, muß sich aber nicht ganzflächig über das beispielsweise dreidimensionale Substrat erstrecken. So ist es beispielsweise bevorzugt, eine ganzflächige erste Beschichtung durch autophoretische Abscheidung aus dem Autophoreselack und eine physikalische und/oder chemische Behandlung und/oder die Applikation einer haftvermittelnden Überzugsschicht im wesentlichen nur an äußeren Bereichen, insbesondere an sichtbaren Flächen vorzunehmen, d.h. beispielsweise nicht in engen Hohlräumen einer Karosserie. Ebenso kann (bei allen drei Ausführungsformen des erfindungsgemäßen Verfahrens) mit der oder den durch Spritzlackierung aufgebrachten Folgeüberzugsschichten verfahren werden, d.h. es ist bevorzugt die Spritzapplikation einer oder mehrerer Folgeüberzugsschichten im wesentlichen nur an äußeren Bereichen, insbesondere an sichtbaren Flächen d. h. beispielsweise nicht in engen Hohlräumen einer Karosserie.

Das erfindungsgemäße Verfahren erlaubt die Herstellung von Kraftfahrzeug-Mehrschichtlackierungen mit im Vergleich zum Stand der Technik vergleichbarem Gesamteigenschaftsniveau, d.h. sie entsprechen in ihrem technologischen und optischen Gesamtniveau solchen Mehrschichtlackierungen, die übliche Konversionsschichten und eine Elektrotauchgrundierung anstelle der haftvermittelnde Bestandteile enthaltenden und/oder physikalisch und/oder chemisch behandelten und/oder mit einer haftvermittelnden Überzugsschicht versehenen Autophoresegrundierung aufweisen. Die Haftung der nach dem erfindungsgemäßen Verfahren hergestellten Lackschichten untereinander und zur Autophoresegrundierung entspricht den hohen Anforderungen in der Autoserienlackierung.

## Patentansprüche

1. Verfahren zur Herstellung einer Kraftfahrzeug-Mehrschichtlackierung auf einem eine autophoretisch beschichtbare, metallische Oberfläche aufweisenden Substrat, bei dem eine erste Grundierungsüberzugsschicht aus einem autophoretisch abscheidbaren Überzugsmittel autophoretisch abgeschieden und anschließend eingebrannt wird und danach ein oder mehrere Folgeüberzugsschichten durch Spritzen aufgebracht werden, wobei das autophoretisch abscheidbare Überzugsmittel ein oder mehrere haftvermittelnd wirkende Bestandteile enthält und/oder wobei bevor eine oder mehrere weitere Überzugsschichten durch Spritzlackierung aufgebracht werden, die eingebrannte durch autophoretische Abscheidung erzeugte Grundierungsschicht physikalisch und/oder chemisch behandelt und/oder mit einer haftvermittelnden Überzugsschicht versehen wird.

2. Verfahren nach Anspruch 1, dadurch gekennzeichnet, daß das autophoretisch abscheidbare Überzugsmittel als Haftvermittler chlorierte und/oder durch Umsetzung mit Maleinsäureanhydrid mit Carboxylgruppen versehene Polyolefine enthält.

3. Verfahren nach Anspruch 1 oder 2, dadurch gekennzeichnet, daß der Anteil des oder der haftvermittelnd wirkenden Bestandteile im autophoretisch abscheidbaren Überzugsmittel 1 bis 30 Gew.-%, bezogen auf den Festharzgehalt des autophoretisch abscheidbaren Überzugsmittels beträgt.

4. Verfahren nach einem der Ansprüche 1 bis 3, dadurch gekennzeichnet, daß die Grundierungsschicht einer Coronabehandlung, Plasmabehandlung, einer Beflammung, einer Bestrahlung mit ultraviolettem Licht und/oder einer Ätzung mit aggresiven chemischen Agenzien unterworfen wird.

5. Verfahren nach einem der Ansprüche 1 bis 4, dadurch gekennzeichnet, daß als haftvermittelnde Überzugsschicht ein Überzugsmittel aufgebracht wird, das als Bindemittel ein Epoxid/Amin- oder ein Polyurethansystem enthält.

6. Verfahren nach einem der Ansprüche 1 bis 5, dadurch gekennzeichnet, daß das haftvermittelnde Überzugsmittel 2 bis 25 Gew.-% chlorierte und/oder durch Umsetzung mit Maleinsäureanhydrid mit Carboxylgruppen versehene Polyolefine enthält.

7. Verfahren nach einem der Ansprüche 1 bis 4 oder 6, dadurch gekennzeichnet, daß das auf die durch autophoretisch Abscheidung erzeugte Grundierungsschicht zur Herstellung der folgenden Überzugsschicht aufgebrachte Überzugsmittel ein Füller, Basislack oder modifizierter Basislack ist und eine oder mehrere haftvermittelnde Komponenten enthält.

8. Verfahren nach Anspruch 1 bis 7, dadurch gekennzeichnet, daß bei der Beschichtung eines dreidimensionalen Substrats eine ganzflächige erste Beschichtung durch autophoretische Abscheidung und eine physikalische und/oder chemische Behandlung und/oder die Applikation einer haftvermittelnden Überzugsschicht nur an äußeren Bereichen durchgeführt werden.

## Claims

1. A process for producing a multilayered motor vehicle lacquer on a substrate with an autophoretically coatable metallic surface in which a first primer coating layer consisting of an autophoretically depositable coating agent is autophoretically deposited and then fired on and then one or more subsequent coating layers are applied by spraying, wherein the autophoretically depositable coating agent contains one or more adhesion-promoting constituents and/or wherein, before applying one or more further coating layers by spray lacquering, the fired on primer layer produced by autophoretic deposition is physically and/or chemically treated and/or provided with an adhesion-promoting coating layer.

2. A process according to Claim 1, characterised in that the autophoretically depositable coating agent contains polyolefins which are chlorinated and/or are provided with carboxyl groups by reaction with maleic anhydride as adhesion promoters.

3. A process according to Claim 1 or 2, characterised in that the proportion of adhesion-promoting constituent(s) in the autophoretically depositable coating agent is 1 to 30 wt.%, with respect to the solid resin content of the autophoretically depositable coating agent.

4. A process according to one of Claims 1 to 3, characterised in that the primer layer is subjected to corona treatment, plasma treatment, flame treatment, irradiation with ultraviolet light and/or etching with aggressive chemical agents.

5. A process according to one of Claims 1 to 4, characterised in that a coating agent which contains an epoxide/amine or a polyurethane system as binder is applied as the adhesion-promoting coating layer.

6. A process according to one of Claims 1 to 5, characterised in that the adhesion-promoting coating agent contains 2 to 25 wt.% of polyolefins which are chlorinated and or are provided with carboxyl groups by reaction with maleic anhydride.

7. A process according to one of Claims 1 to 4 or 6, characterised in that the coating agent applied to the primer layer produced by autophoretic deposition in order to produce the subsequent coating layer is a filler, a base lacquer or a modified base lacquer and contains one or more adhesion-promoting components.

8. A process according to Claims 1 to 7, characterised in that, when coating a three-dimensional substrate, the entire surface is coated in the first coating process by autophoretic deposition and that physical and/or chemical treatment and/or application of an adhesion-promoting coating layer is performed only on external areas.

## Revendications

1. Procédé pour préparer un laquage multicouche pour véhicule à moteur sur un substrat présentant une surface métallique que l'on peut recouvrir par voie autophorétique, dans lequel on dépose par voie autophorétique une première couche de revêtement d'apprêt, à partir d'un agent de revêtement que l'on peut déposer par voie autophorétique, et on la cuit ensuite, puis on applique par projection une ou plusieurs couches ultérieures de revêtement, où l'agent de revêtement que l'on peut déposer par voie autophorétique comporte un ou plusieurs constituants agissant pour donner de l'adhésion et/ou où, avant d'appliquer une ou plusieurs autres couches de revêtement par laquage avec projection, la couche d'apprêt obtenue par dépôt autophorétique et cuite est traitée physiquement et/ou chimiquement et/ou est munie d'une couche de revêtement donnant de l'adhésion.

2. Procédé selon la revendication 1, caractérisé en ce que l'agent de revêtement que l'on peut déposer par voie autophorétique comporte comme agent d'adhésion des polyoléfines chlorées et/ou munies de groupes carboxyles par réaction avec l'anhydride de l'acide maléique.

3. Procédé selon la revendication 1 ou 2, caractérisé en ce que la portion du ou des constituants agissant pour donner de l'adhésion dans l'agent de revêtement que l'on peut déposer par voie autophorétique est de 1 à 30 % en poids par rapport à la teneur en résine solide de l'agent de revêtement que l'on peut déposer par voie autophorétique.

4. Procédé selon une des revendications 1 à 3, caractérisé en ce que la couche d'apprêt est soumise à un traitement par effet corona, à un traitement par plasma, à ùn traitement à la flamme, à une irradiation à la lumière ultraviolette et/ou à une attaque avec des agents chimiques agressifs.

5. Procédé selon une des revendications 1 à 4, caractérisé en ce que, comme couche de revêtement donnant de l'adhésion, on applique un agent de revêtement qui comporte, comme agent liant un système époxy/amine ou un système de polyuréthanne.

6. Procédé selon une des revendications 1 à 5, caractérisé en ce que l'agent de revêtement donnant de l'adhésion comporte de 2 à 25 % en poids de polyoléfines chlorées et/ou munies de groupes carboxyles par réaction avec l'anhydride de l'acide maléique.

7. Procédé selon une des revendications 1 à 4 ou 6, caractérisé en ce que l'agent de revêtement appliqué sur la couche d'apprêt, obtenue par dépôt autophorétique, pour préparer les couches ultérieures de revêtement est une charge, une laque de base ou une laque de base modifiée, et comporte un ou plusieurs composants donnant de l'adhésion.

8. Procédé selon la revendication 1 à 7, caractérisé en ce que, lors du revêtement d'un substrat tridimensionnel, on effectue un premier revêtement par dépôt autophorétique sur toute la surface, et un traitement physique et/ou chimique et/ou l'application d'une couche de revêtement donnant de l'adhésion seulement sur des zones extérieures.
